(19) Europäisches Patentamt
European Patent Office
Office européen des brevets

(11) **EP 1 177 526 B1**

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(51) Int Cl.⁷: $G06T\ 7/20$, $H04N\ 7/26$

(21) Anmeldenummer: **00936665.9**

(22) Anmeldetag: **03.05.2000**

(86) Internationale Anmeldenummer:
**PCT/DE00/01390**

(87) Internationale Veröffentlichungsnummer:
**WO 00/068885 (16.11.2000 Gazette 2000/46)**

(54) **VERFAHREN UND ANORDNUNG ZUR ERMITTLUNG EINER BEWEGUNG, DER EIN DIGITALISIERTES BILD UNTERLIEGT, SOWIE COMPUTERPROGRAMM-ERZEUGNIS UND COMPUTERLESBARES SPEICHERMEDIUM**

METHOD AND DEVICE FOR DETERMINING A MOVEMENT TO WHICH A DIGITALISED IMAGE IS SUBJECTED AND COMPUTER PROGRAMME PRODUCTS AND COMPUTER-READABLE STORAGE MEDIUM

PROCEDE ET DISPOSITIF POUR DETERMINER UN MOUVEMENT AUQUEL EST SOUMIS UNE IMAGE NUMERISEE, PRODUIT-PROGRAMME D'ORDINATEUR ET SUPPORT D'INFORMATION LISIBLE PAR UN ORDINATEUR

(84) Benannte Vertragsstaaten:
**DE FI FR GB SE**

(30) Priorität: **07.05.1999 DE 19921250**

(43) Veröffentlichungstag der Anmeldung:
**06.02.2002 Patentblatt 2002/06**

(73) Patentinhaber: **SIEMENS AKTIENGESELLSCHAFT**
**80333 München (DE)**

(72) Erfinder: **KUTKA, Robert**
**D-82269 Geltendorf (DE)**

(56) Entgegenhaltungen:
**US-A- 5 430 480          US-A- 5 539 466**
**US-A- 5 565 920          US-A- 5 838 828**

**Beschreibung**

Die Erfindung betrifft ein Verfahren sowie eine Anordnung zur Ermittlung einer Bewegung, der ein digitalisiertes Bild unterliegt.

Verfahren und Anordnungen zur Ermittlung einer Bewegung, der ein digitalisiertes Bild unterliegt, sind aus [1], [2], [3], [4], [5] und [6] bekannt.

Bei diesen Verfahren wird eine globale relative Bewegung zwischen einer Kamera und einer von der Kamera aufgezeichneten Folge von Bildern bestimmt.

Dabei werden zur Ermittlung der relativen Bewegung von aufgenommenen Bildern jeweils nur das aktuelle Bild, für das die Bewegung ermittelt werden soll, und das unmittelbar zeitlich vorangegangene Bild, berücksichtigt.

Diese Vorgehensweise weist insbesondere den Nachteil auf, daß sich Rundungsfehler bei der Ermittlung der Bewegung von Bild zu Bild addieren, so daß beispielsweise eine Zitterbewegung bei der Bedienung einer Kamera nicht vollständig beseitigt werden kann.

Dies führt insbesondere bei Videoaufnahmen mit handgehaltener Kamera zu erheblichen Qualitätseinbußen. Videoaufnahmen mit handgehaltener Kamera leiden nämlich oft an störenden Bewegungen, verursacht durch das Zittern der die Kamera führenden Hand. Das Zittern verursacht einen unruhigen Bildeindruck. Darüber hinaus erschwert es die digitale Datenkompression. Es ist daher wünschenswert, die Zitterbewegung möglichst gut zu kompensieren und eine gleichmäßige Szenenbewegung darzustellen.

Aus [7] ist ein Apparat und Verfahren zur Ermittlung von Bewegungen in einem Videosignal bekannt, bei dem unter Berücksichtigung eines Referenzbildes eine Bewegungsschätzung für das Bild durchgeführt und jeweils zu einem Zeitpunkt ein zu codierendes Bild generiert wird, wobei sich das Referenzbild in einer Sequenz ein oder mehrere Bilder (frames) vor dem zu codierenden Bild befindet.

Aus [8] ist eine Anordnung zur sensorgesteuerten Bewegungskompensation bei Kameras bekannt.

Somit liegt der Erfindung das Problem zugrunde, ein Verfahren und eine Anordnung zur Ermittlung einer Bewegung, der ein digitales Bild unterliegt, anzugeben, bei dem Rundungsfehler im Rahmen der Bewegungsermittlung sich nicht von Bild zu Bild addieren.

Das Problem wird durch das Verfahren, die Anordnung, das Computerprogramm-Erzeugnis sowie das computerlesbare Speichermedium mit den Merkmalen gemäß den unabhängigen Patentansprüchen gelöst.

Ein Verfahren zur rechnergestützten Ermittlung einer Bewegung, der ein digitalisiertes Bild unterliegt, weist folgende Verfahrensschritte auf:

- das digitalisierte Bild enthält Bildpunkte,
- unter Berücksichtigung eines Referenzbildes wird eine Bewegungsschätzung für das Bild durchgeführt,
- das Referenzbild ist zumindest zwei Zeitpunkte vor dem digitalisierten Bild generiert worden, wobei zu jeweils einem Zeitpunkt ein zu codierendes Bild generiert wird,
- die Bewegung wird aus der Bewegungsschätzung ermittelt,
- der Zeitpunkt, zu dem das Referenzbild generiert worden ist, hängt von einem vorgegebenen Schwellenwert ab und
- der Schwellenwert (S) abhängig ist von der Summe der ermittelten Bewegungen von Bildern, die bis zu einer vorgegebenen Anzahl vorangegangener Zeitpunkte generiert worden sind.

Eine Anordnung zur Ermittlung einer Bewegung, der ein digitalisiertes Bild unterliegt, weist einen Prozessor auf, der derart eingerichtet ist, daß folgende Schritte durchführbar sind:

- das digitalisierte Bild enthält Bildpunkte,
- unter Berücksichtigung eines Referenzbildes wird eine Bewegungsschätzung für das Bild durchgeführt,
- das Referenzbild ist zumindest zwei Zeitpunkte vor dem digitalisierten Bild generiert worden, wobei zu jeweils einem Zeitpunkt ein zu codierendes Bild generiert wird,
- die Bewegung wird aus der Bewegungsschätzung ermittelt.

Ein Computerprogramm-Erzeugnis umfaßt ein computerlesbares Speichermedium, auf dem ein Programm gespeichert ist, das es einem Computer ermöglicht, nachdem es in einen Speicher des Computers geladen worden ist, folgende Schritte durchzuführen zur Ermittlung einer Bewegung, der ein digitalisiertes Bild unterliegt:

- das digitalisierte Bild enthält Bildpunkte,
- unter Berücksichtigung eines Referenzbildes wird eine Bewegungsschätzung für das Bild durchgeführt,
- das Referenzbild ist zumindest zwei Zeitpunkte vor dem digitalisierten Bild generiert worden, wobei zu jeweils einem Zeitpunkt ein zu codierendes Bild generiert wird, und
- die Bewegung wird aus der Bewegungsschätzung ermittelt.

Auf einem computerlesbaren Speichermedium ist ein Programm gespeichert, das es einem Computer ermöglicht, nachdem es in einen Speicher des Computers geladen worden ist, folgende Schritte durchzuführen zur Ermittlung einer Bewegung, der ein digitalisiertes Bild unterliegt:

- das digitalisierte Bild enthält Bildpunkte,
- unter Berücksichtigung eines Referenzbildes wird eine Bewegungsschätzung für das Bild durchgeführt,
- das Referenzbild ist zumindest zwei Zeitpunkte vor dem digitalisierten Bild generiert worden, wobei zu jeweils einem Zeitpunkt ein zu codierendes Bild generiert wird, und
- die Bewegung wird aus der Bewegungsschätzung ermittelt.

Durch die Erfindung wird vermieden, daß sich Rundungsfehler bei der Bewegungsschätzung von Bild zu Bild addieren. Damit wird eine Voraussetzung für eine verbesserte Kompensation des Zitterns einer handgehaltenen Kamera gewährleistet, nämlich eine gegenüber den Verfahren aus dem Stand der Technik verbesserte Ermittlung der Bewegung, der das digitalisierte Bild unterliegt.

Ein weiterer Vorteil ist der geringere Aufwand für das Kopieren von Bildern. Im Gegensatz zu den bekannten Verfahren werden nicht alle übertragenen Bilder in den Referenzspeicher kopiert, was zu einer erheblichen Einsparung an Zeit zur Codierung eines Bildes führt.

Bevorzugte Weiterbildungen der Erfindung ergeben sich aus den abhängigen Ansprüchen.

In einer Weiterbildung wird als Referenzbild ein Bild verwendet, das zumindest drei Zeitpunkte vor dem digitalisierten Bild generiert worden ist.

Der Zeitpunkt, zu dem das verwendete Referenzbild generiert worden ist, kann von einem vorgegebenen Schwellenwert abhängig sein, der variabel ausgestaltet sein kann. Durch diese Weiterbildung wird erreicht, daß abhängig von einer unterschiedlich starken Schwenkbewegung einer Anordnung, die eine Szene als digitalisierte Bilder aufnimmt, als Maß dafür berücksichtigt wird, wie viele Bilder "übersprungen" werden, ausgehend von dem zu bearbeitenden Bild hin zu dem verwendeten Referenzbild.

In einer weiteren Ausgestaltung ist es vorgesehen, daß der Schwellenwert abhängig ist von der Summe der ermittelten Bewegungen von Bildern, die bis zu einer vorgegebenen Anzahl vorangegangener Zeitpunkte generiert worden sind.

Diese Weiterbildung führt zu einem sehr verläßlichen Kriterium zur Bestimmung des Schwellenwerts.

Die ermittelte Bewegung kann zur Kompensation einer tatsächlichen Bewegung der Anordnung, mit der das Bild aufgenommen wird, eingesetzt werden.

Sie kann ferner zur Kompensation einer Kamerabewegung oder auch zur Kompensation einer Bewegung eines mobilen Kommunikationsendgeräts, welches die Kamera umfaßt, dienen.

Ein Ausführungsbeispiel der Erfindung ist in den Zeichnungen dargestellt und wird im weiteren näher erläutert.

Es zeigen

Figur 1 ein Blockdiagramm, in dem das anschauliche Prinzip des Ausführungsbeispiels dargestellt ist;

Figur 2 eine Skizze einer Anordnung mit einer Kamera und einer Codiereinheit zur Codierung der mit der Kamera aufgenommenen Bildfolge sowie eine Anordnung zur Decodierung der codierten Bildfolge;

Figur 3 eine detaillierte Skizze der Anordnung zur Bildcodierung und zur globalen Bewegungskompensation;

Figuren 4 a bis c jeweils ein Bild, in dem ein Bewegungsvektorfeld für das Bild gegenüber einem zeitlich vorangegangenen Bild mit einem vorgegebenen Bereich (Figur 1a), aus dem jeweils die Bewegungsvektoren zur Bildung von Parametern eines Bewegungsmodells ermittelt bestimmt werden und, ein Bild mit allen Bewegungsvektoren (Figur 1b) und ein Bild mit Bewegungsvektoren nach einer Iteration des Verfahrens mit dem in Figur 1a dargestellten vorgegebenen Bereich (Figur 1c);

Figur 5 ein Ablaufdiagramm, in dem die Verfahrensschritte des Ausführungsbeispiels dargestellt sind.

Figur 6 eine Skizze, in der eine Vielzahl von Bildern und Referenzbildern dargestellt ist.

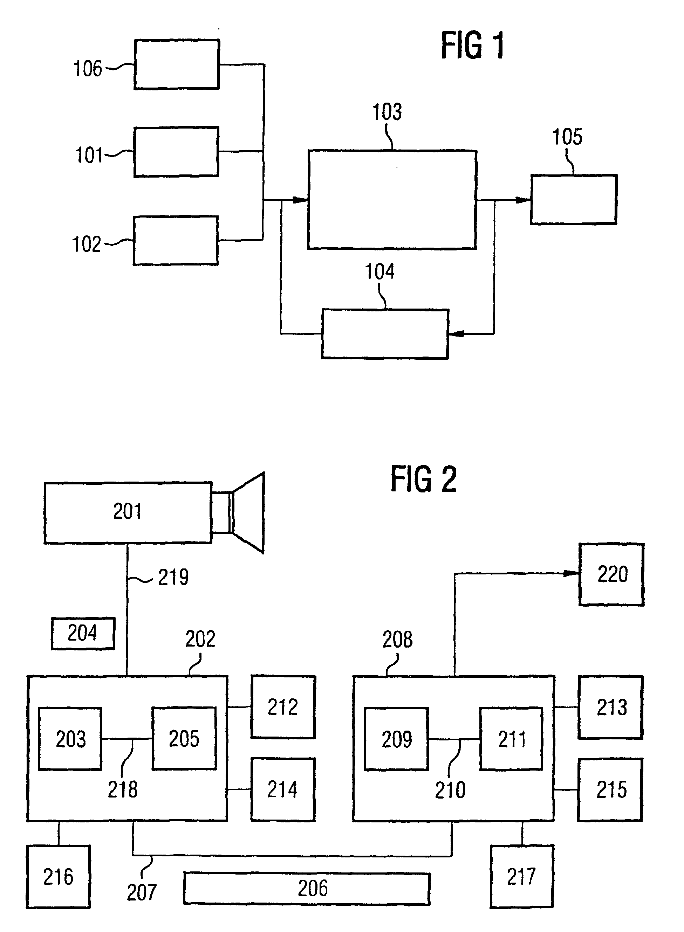

In **Fig.2** ist eine Anordnung dargestellt, die zwei Rechner 202, 208 und eine Kamera 201 umfaßt, wobei Bildcodierung, Übertragung der Bilddaten und Bilddecodierung veranschaulicht werden.

Eine Kamera 201 ist mit einem ersten Rechner 202 über eine Leitung 219 verbunden. Die Kamera 201 übermittelt aufgenommene Bilder 204 an den ersten Rechner 202. Der erste Rechner 202 verfügt über einen ersten Prozessor 203, der über einen Bus 218 mit einem Bildspeicher 205 verbunden ist. Mit dem ersten Prozessor 203 des ersten Rechners 202 wird ein Verfahren zur Bildcodierung durchgeführt. Auf diese Art codierte Bilddaten 206 werden von dem ersten Rechner 202 über eine Kommunikationsverbindung 207, vorzugsweise eine Leitung oder eine Funkstrecke, zu einem zweiten Rechner 208 übertragen. Der zweite Rechner 208 enthält einen zweiten Prozessor 209, der über einen Bus 210 mit einem Bildspeicher 211 verbunden ist. Mit dem zweiten Prozessor 209 wird ein Verfahren zur Bilddecodierung durchgeführt.

Sowohl der erste Rechner 202 als auch der zweite Rechner 208 verfügen jeweils über einen Bildschirm 212 bzw. 213, auf dem die Bilddaten 204 visualisiert werden. Zur Bedienung sowohl des ersten Rechners 202 als auch des zweiten Rechners 208 sind jeweils Eingabeeinheiten vorgesehen, vorzugsweise eine Tastatur 214 bzw. 215, sowie eine Computermaus 216 bzw. 217.

Die Bilddaten 204, die von der Kamera 201 über die Leitung 219 zu dem ersten Rechner 202 übertragen werden, sind Daten im Zeitbereich, während die Daten 206, die von dem ersten Rechner 202 zu dem zweiten Rechner 208 über die Kommunikationsverbindung 207 übertragen werden, Bilddaten im Spektralbereich sind.

Auf einem Bildschirm 220 werden die decodierten Bilddaten dargestellt.

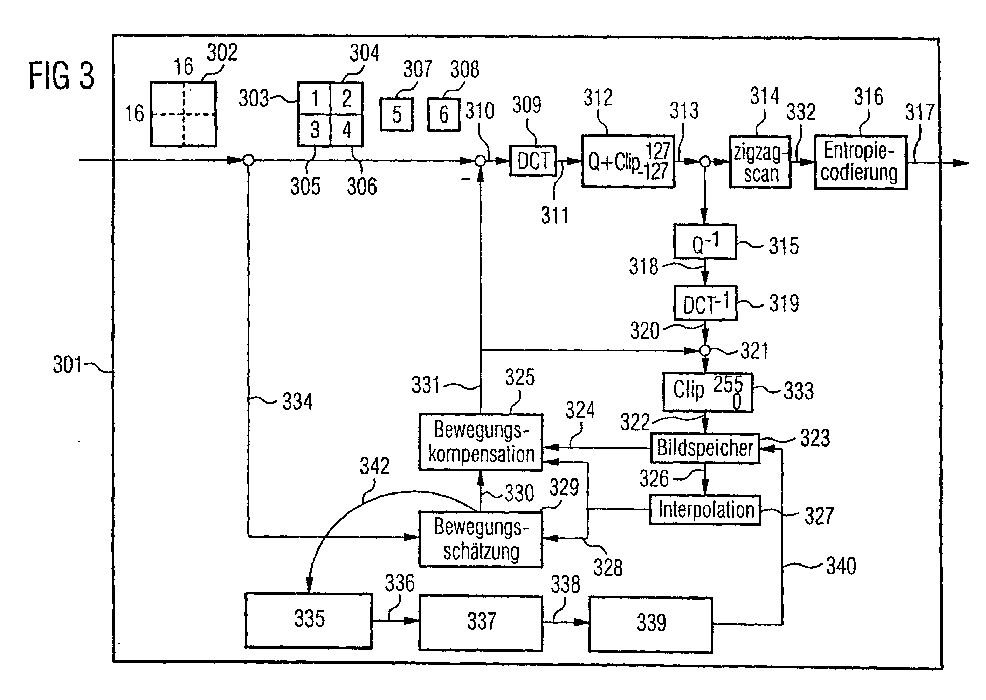

**Fig.3** zeigt eine Skizze einer Anordnung zur Durchführung eines gemäß dem Ausführungsbeispiel angepaßten blockbasierten Bildcodierungsverfahrens.

Ein zu codierender Videodatenstrom mit zeitlich aufeinanderfolgenden digitalisierten Bildern wird einer Bildcodierungseinheit 301 zugeführt. Die digitalisierten Bilder sind unterteilt in Makroblöcke 302, wobei jeder Makroblock 16x16 Bildpunkte enthält. Der Makroblock 302 umfaßt 4 Bildblöcke 303, 304, 305 und 306, wobei jeder Bildblock 8x8 Bildpunkte, denen Luminanzwerte (Helligkeitswerte) zugeordnet sind, enthält. Weiterhin umfaßt jeder Makroblock 302 zwei Chrominanzblöcke 307 und 308 mit den Bildpunkten zugeordneten Chrominanzwerten (Farbinformation, Farbsättigung).

Der Block eines Bildes enthält einen Luminanzwert (=Helligkeit), einen ersten Chrominanzwert (=Farbton) und einen zweiten Chrominanzwert (=Farbsättigung). Dabei werden Luminanzwert, erster Chrominanzwert und zweiter Chrominanzwert als Farbwerte bezeichnet.

Die Bildblöcke werden einer Transformationscodierungseinheit 309 zugeführt. Bei einer Differenzbildcodierung werden zu codierende Werte von Bildblöcken zeitlich vorangegangener Bilder von den aktuell zu codierenden Bildblöcken abgezogen, es wird nur die Differenzbildungsinformation 310 der Transformationscodierungseinheit (Diskrete Cosinus Transformation, DCT) 309 zugeführt. Dazu wird über eine Verbindung 334 der aktuelle Makroblock 302 einer Bewegungsschätzungseinheit 329 mitgeteilt. In der Transformationscodierungseinheit 309 werden für die zu codierenden Bildblöcke bzw. Differenzbildblöcke Spektralkoeffizienten 311 gebildet und einer Quantisierungseinheit 312 zugeführt.

Quantisierte Spektralkoeffizienten 313 werden sowohl einer Scaneinheit 314 als auch einer inversen Quantisierungseinheit 315 in einem Rückwärtspfad zugeführt. Nach einem Scanverfahren, z.B. einem "zigzag"-Scanverfahren, wird auf den gescannten Spektralkoeffizienten 332 eine Entropiecodierung in einer dafür vorgesehenen Entropiecodierungseinheit 316 durchgeführt. Die entropiecodierten Spektralkoeffizienten werden als codierte Bilddaten 317 über einen Kanal, vorzugsweise eine Leitung oder eine Funkstrecke, zu einem Decoder übertragen.

In der inversen Quantisierungseinheit 315 erfolgt eine inverse Quantisierung der quantisierten Spektralkoeffizienten 313. So gewonnene Spektralkoeffizienten 318 werden einer inversen Transformationscodierungseinheit 319 (Inverse Diskrete Cosinus Transformation, IDCT) zugeführt. Rekonstruierte Codierungswerte (auch Differenzcodierungswerte) 320 werden im Differenzbildmodus einem Addierer 321 zugeführt. Der Addierer 321 erhält ferner Codierungswerte eines Bildblocks, die sich aus einem zeitlich vorangegangenen Bild nach einer bereits durchgeführten Bewegungskompensation ergeben. Mit dem Addierer 321 werden rekonstruierte Bildblöcke 322 gebildet und in einem Bildspeicher 323 abgespeichert.

Chrominanzwerte 324 der rekonstruierten Bildblöcke 322 werden aus dem Bildspeicher 323 einer Bewegungskompensationseinheit 325 zugeführt. Für Helligkeitswerte 326 erfolgt eine Interpolation in einer dafür vorgesehenen Interpolationseinheit 327. Anhand der Interpolation wird die Anzahl in dem jeweiligen Bildblock enthaltener Helligkeitswerte vorzugsweise verdoppelt. Alle Helligkeitswerte 328 werden sowohl der Bewegungskompensationseinheit 325 als auch der Bewegungsschätzungseinheit 329 zugeführt. Die Bewegungsschätzungseinheit 329 erhält außerdem die Bildblöcke des jeweils zu codierenden Makroblocks (16x16 Bildpunkte) über die Verbindung 334. In der Bewegungsschätzungseinheit 329 erfolgt die Bewegungsschätzung unter Berücksichtigung der interpolierten Helligkeitswerte ("Bewegungsschätzung auf Halbpixelbasis").

In diesem Zusammenhang ist anzumerken, daß jeweils zu einem Zeitpunkt ein zu codierendes Bild generiert wird.

Somit bildet der zu codierende Videodatenstrom eine Menge von Bildern, die gemäß einer Folge äquidistanter Zeitpunkte nacheinander generiert werden.

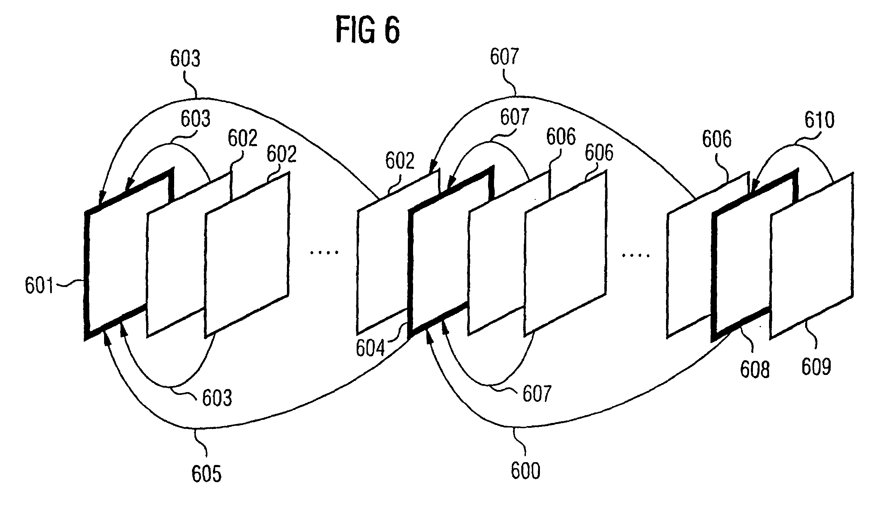

Die Bewegungsschätzung für das zu codierende Bild unter Berücksichtigung eines Referenzbildes, das zumindest zwei Zeitpunkte vor dem zu codierenden Bild generiert worden ist wird im weiteren erläutert (vgl. **Fig.6).**

**Fig.6** zeigt eine Folge 600 von Bildern 601, 602, 604, 606, 608, 609, für die eine Bewegung ermittelt werden soll. Ausgehend von einem ersten Referenzbild 601 erfolgt für eine vorgebbare Anzahl S zeitlich nachfolgenden Bildern, die jeweils zu einem nachfolgenden Zeitpunkt generiert werden, eine Bewegungsschätzung auf der Grundlage des ersten Referenzbildes 601. Die Bilder, für die die Bewegung auf der Grundlage des ersten Referenzbildes 601 ermittelt wird, sind in **Fig.6** mit 602 bezeichnet.

Das oben beschriebene Prinzip ist jeweils durch einen von dem jeweiligen Bild 602 ausgehenden, rückwärts gerichteten Pfeil 603 zu dem ersten Referenzbild 601 symbolisch dargestellt.

Nach S Bildern 602, symbolisiert durch Pfeil 605, wird ein zweites Referenzbild 604 generiert. Das zweite Referenzbild wird vollständig codiert, ohne Einsatz von Differenzbildinformation und somit ohne Bewegungsschätzung.

Das zweite Referenzbild 604 dient als Basis zur Bewegungsschätzung von S weiteren Bildern 606, deren Bewegung jeweils auf Basis des zweiten Referenzbildes 604 ermittelt wird.

Die Anzahl S der unter Verwendung des zweiten Referenzbildes 604 bearbeiteten Bilder 606 (Bewegungsschätzung unter Berücksichtigung des zweiten Referenzbildes 604 symbolisiert durch Pfeile 607) muß nicht gleich der Anzahl von Bildern 602 sein, die unter Berücksichtigung des ersten Referenzbildes 601 codiert werden.

Dem letzten Bild 606, für den die Ermittlung der Bewegung auf der Grundlage des zweiten Referenzbildes 6045 erfolgt, folgt ein drittes Referenzbild 608, unter dessen Berücksichtigung die Ermittlung der Bewegung weiterer Bilder 609 erfolgt (symbolisiert durch Pfeil 610).

Das Ergebnis der Bewegungsschätzung ist ein Bewegungsvektor 330, durch den eine örtliche Verschiebung des ausgewählten Makroblocks aus dem zeitlich vorangegangenen Bild zu dem zu codierenden Makroblock 302 zum Ausdruck kommt.

Sowohl Helligkeitsinformation als auch Chrominanzinformation bezogen auf den durch die Bewegungsschätzungseinheit 329 ermittelten Makroblock werden um den Bewegungsvektor 330 verschoben und von den Codierungswerten des Makroblocks 302 subtrahiert (siehe Datenpfad 231).

Die Bewegungsschätzung erfolgt derart, daß für jeden Bildblock, für den eine Bewegungsschätzung durchgeführt wird, ein Fehler E gegenüber einem Gebiet gleicher Form und Größe wie der Bildblock in einem zeitlich vorangegangen Bild beispielsweise gemäß folgender Vorschrift ermittelt wird:

$$E = \sum_{i=1}^{n} \sum_{j=1}^{m} \left| x_{i,j} - xd_{i,j} \right| \rightarrow \min \qquad \forall d \in S, \qquad (1)$$

wobei mit

- i, j jeweils ein Index,
- n, m eine Anzahl (n) von Bildpunkten entlang einer ersten Richtung x bzw. eine Anzahl (m) von Bildpunkten entlang einer zweiten Richtung y, die in dem Bildblock enthalten sind,
- $x_{i,j}$ die Codierungsinformation, die einem Bildpunkt an der durch die Indizes i,j bezeichneten relativen Position in dem Bildblock zugeordnet ist,
- $xd_{i,j}$ die Codierungsinformation, die dem jeweiligen durch i,j bezeichneten Bildpunkt in dem Gebiet des zeitlich vorangegangenen Bildes, verschoben um einen vorgebbaren Wert d, zugeordnet ist,
- S ein Suchraum vorgegebener Form und Größe, in dem zeitlich vorangegangen Bild,

bezeichnet wird,

Die Berechnung des Fehlers E wird für jeden Bildblock für verschiedene Verschiebungen innerhalb des Suchraums S durchgeführt. Es wird derjenige Bildblock in dem zeitlich vorangegangenen Bild als dem Bildblock, für den die Bewegungsschätzung durchgeführt wird, ähnlichsten ausgewählt, dessen Fehler E minimal ist.

Als Ergebnis der Bewegungsschätzung ergibt sich somit der Bewegungsvektor 330 mit zwei Bewegungsvektorkomponenten, einer ersten Bewegungsvektorkomponente $BV_x$ und einer zweiten Bewegungsvektorkomponente $BV_y$ entlang der ersten Richtung x und der zweiten Richtung y:

$$BV = \begin{pmatrix} BV_x \\ BV_y \end{pmatrix}.$$

Der Bewegungsvektor 330 wird dem Bildblock zugeordnet.

Die Bildcodierungseinheit aus Figur 3 liefert somit für alle Bildblöcke bzw. Makrobildblöcke einen Bewegungsvektor 330.

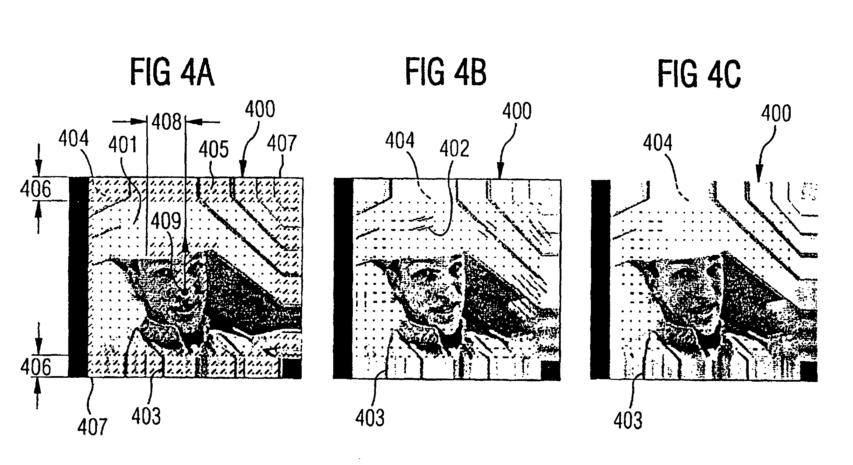

Die Bewegungsvektoren 330 werden einer Einheit 335 zur Auswahl bzw. Gewichtung der Bewegungsvektoren 330 zugeführt. In der Einheit zur Auswahl der Bewegungsvektoren 335 werden diejenigen Bewegungsvektoren 330 ausgewählt bzw. hoch gewichtet, die Bildblöcken zugeordnet sind, die sich in einem vorgegebenen Bereich 401 (vgl. Figur 4a) befinden. Des weiteren werden in der Einheit 335 Bewegungsvektoren ausgewählt bzw. hoch gewichtet, die zuverlässig (342) geschätzt wurden.

Die ausgewählten Bewegungsvektoren 336 werden einer Einheit zur Ermittlung der Parameter des Bewegungsmodells 337 zugeführt. In der Einheit zur Ermittlung der Parameter des Bewegungsmodells 337 wird aus den ausgewählten Bewegungsvektoren das im weiteren beschriebene Bewegungsmodell gemäß Figur 1 ermittelt.

Das ermittelte Bewegungsmodell 338 wird einer Einheit zur Kompensation 339 der Bewegung zwischen der Kamera und dem aufgenommen Bild zugeführt. In der Einheit zur Kompensation 339 wird entsprechend eines im weiteren beschriebenen Bewegungsmodells die Bewegung kompensiert, so daß ein in seiner Bewegung kompensiertes, in geringerem Maße verwackeltes Bild 340 in dem Bildspeicher 323 in dem das zuvor nicht bearbeitete, in seiner Bewegung zu kompensierende Bild gespeichert ist, nach der Bearbeitung in der Einheit zur Kompensation 339 wieder gespeichert.

**Fig.1** zeigt in Form eines Blockschaltbildes das Prinzip, welches der globalen Bewegungsermittlung zugrundeliegt.

Ausgehend von einem Bewegungsvektorfeld 101, dem vorgegebenen Bereich bzw. einer Gewichtungsmaske 102 und einer Gewichtungsmaske von Zuverlässigkeitsfaktoren 106 werden die Parameter des im weiteren beschriebenen Bewegungsmodells 338 berechnet (Schritt 103).

Unter einem Bewegungsvektorfeld 101 ist eine Menge aller ermittelten Bewegungsvektoren 330 zu einem Bild zu verstehen. Das Bewegungsvektorfeld 101 ist in **Fig.4b** durch Striche, die jeweils einen Bewegungsvektor 330 für einen Bildblock beschreiben, dargestellt (402). Das Bewegungsvektorfeld 402 ist auf dem digitalisierten Bild 400 skizziert. Das Bild 400 umfaßt ein sich bewegendes Objekt 403 in Form einer Person sowie einen Bildhintergrund 404.

**Fig.4a** zeigt einen vorgegebenen Bereich 401. Der vorgegebene Bereich 401 gibt ein Gebiet an, in dem die Bildblöcke liegen müssen, damit die Bewegungsvektoren, die diesen Bildblöcken zugeordnet sind, ausgewählt werden.

Der vorgegebene Bereich 401 ergibt sich dadurch, daß ein Randbereich 405, der gebildet wird durch Bildblöcke, die in einem vorgegebenen ersten Abstand von 406 von einem Rand 407 des digitalisierten Bildes 400 liegen. Dadurch werden Bildblöcke direkt am Rand 407 des Bildes 400 bei der Ermittlung der Parameter des Bewegungsmodells 338 nicht berücksichtigt. Ferner wird der vorgegebene Bereich 401 durch Bildblöcke gebildet, die in einem vorgegebenen zweiten Abstand 408 von der Mitte 409 des digitalisierten Bildes 400 liegen.

Der vorgegebene Bereich bzw. die Gewichtungsmaske wird in einem iterativen Verfahren mit folgenden Schritten verändert zu einem neuen Bereich der folgenden Iteration (Schritt 104).

Für jeden Bildblock in dem vorgegebenen Bereich 401 wird jeweils ein Vektorunterschiedswert VU ermittelt, mit dem der Unterschied des determinierten Bewegungsmodells 338 mit dem Bewegungsvektor 330, der dem jeweiligen Bildblock zugeordnet ist, beschrieben wird. Der Vektorunterschiedswert VU wird beispielsweise gemäß folgender Vorschrift gebildet:

$$VU = |BV_X - MBV_X| + |BV_Y - MBV_Y|, \tag{2}$$

wobei mit $MBV_x$ und $MBV_y$ jeweils die Komponenten eines aufgrund des Bewegungsmodells berechneten Bewegungsvektors MBV bezeichnet sind.

Die Ermittlung des modellbasierten Bewegungsvektors wird im weiteren näher erläutert.

Bei Verwendung einer binären Maske ist ein Bildblock in dem neuen Bereich der weiteren Iteration enthalten, wenn der jeweilige Vektorunterschiedswert VU Kleiner als ein vorgebbarer Schwellenwert $\varepsilon$ ist. Ist jedoch der Vektorunterschiedswert VU größer als der Schwellenwert $\varepsilon$ so wird der Bildblock, dem der jeweilige Bewegungsvektor zugeordnet ist, nicht mehr in dem neuen vorgegebenen Bereich berücksichtigt.

Bei Verwendung einer Gewichtungsmaske werden die Gewichtungsfaktoren der Blöcke im umgekehrten Verhältnis zum dessen VU angegeben.

Durch diese Vorgehensweise wird erreicht, daß diejenigen Bewegungsvektoren, die sich gegenüber den Bewegungsvektoren MBV berechnet aus dem determinierten Bewegungsmodell erheblich unterscheiden, nicht bzw. nur geringfügig bei der Berechnung der Parameter des Bewegungsmodells in einer weiteren Iteration berücksichtigt werden.

Nachdem der neue Bereich bzw. die neue Gewichtungsmaske gebildet worden ist, wird unter Verwendung der Bewegungsvektoren, die Bildblöcken zugeordnet sind, die in dem neuen Bereich enthalten sind, bzw. unter zusätzlicher Verwendung der Gewichtungsmaske ein neuer Parametersatz für das Bewegungsmodell determiniert.

Das oben beschriebene Verfahren wird in einer vorgebbaren Anzahl von Iterationen oder solange bis ein Abbruchkriterium, wie beispielsweise die Unterschreitung einer Anzahl an eliminierten Blöcken in einem Iterationsschritt, erfüllt ist durchgeführt.

Dabei wird jeweils der neue Bereich als der vorgegebene Bereich bzw. die neue Gewichtungsmaske neben den alten Bewegungsvektoren als Eingangsgrößen der nächsten Iteration verwendet.

Die Ermittlung der globalen Bewegung erfolgt derart, daß Parameter eines Modells für die globale Kamerabewegung ermittelt werden.

Zur Verdeutlichung des Bewegungsmodells wird im weiteren eine detaillierte Herleitung des Bewegungsmodells dargestellt:

Es wird davon ausgegangen, daß eine natürliche, dreidimensionale Szene mit der Kamera auf eine zweidimensionale Projektionsebene abgebildet wird. Eine Abbildung eines Punktes

$$\underline{p}_0 = (x_0, y_0, z_0)^\mathsf{T} \tag{4}$$

wird gemäß folgender Vorschrift gebildet:

$$\begin{pmatrix} X \\ Y \end{pmatrix} = \frac{F}{z_0} \begin{pmatrix} x_0 \\ y_0 \end{pmatrix} \quad \wedge \quad z_0 \gg F, \tag{5}$$

wobei mit F eine Brennweite und mit X,Y Koordinaten des abgebildeten Punktes $\underline{p}_0$ auf der Bildebene beschreiben.

Wird nun die Kamera bewegt, so bleibt die Abbildungsvorschrift im synchron zur Kamera mitbewegten Koordinatensystem erhalten, die Koordinaten der Objektpunkte müssen jedoch in dieses Koordinatensystem transformiert werden. Da man alle Kamerabewegungen als Akkumulation von Rotation und Translation auffassen kann, läßt sich die Transformation vom ortsfesten Koordinatensystem (x, y, z) zu einem mitbewegten Koordinatensystem

$$\left( \tilde{x}_0, \tilde{y}_0, \tilde{z}_0 \right)$$

gemäß folgender Vorschrift formulieren;

$$\begin{pmatrix} \tilde{x}_0 \\ \tilde{y}_0 \\ \tilde{z}_0 \end{pmatrix} = \begin{pmatrix} r_{11} & r_{12} & r_{13} \\ r_{21} & r_{22} & r_{23} \\ r_{31} & r_{32} & r_{33} \end{pmatrix} \cdot \begin{pmatrix} x_0 \\ y_0 \\ z_0 \end{pmatrix} + \begin{pmatrix} t_1 \\ t_2 \\ t_3 \end{pmatrix} . \tag{6}$$

Ausgehend von Vorschrift (6) wird eine von der Kamerabewegung verursachte Bildveränderung gemäß folgender Vorschrift modelliert:

$$\begin{pmatrix} \Delta X \\ \Delta Y \end{pmatrix} = \begin{pmatrix} C_F \cos(\varphi_Z) - 1 & - C_F \sin(\varphi_Z) \\ C_F \sin(\varphi_Z) & C_F \cos(\varphi_Z) - 1 \end{pmatrix} \cdot \begin{pmatrix} X \\ Y \end{pmatrix} + \begin{pmatrix} t_X \\ t_Y \end{pmatrix}, \qquad (7)$$

wobei mit $\Delta X$, $\Delta Y$ eine Koordinatenveränderung der Bildpunkte, hervorgerufen in einem Zeitintervall $\Delta t$ bei beschriebener Kamerabewegung ist und mit $\varphi_Z$ der Winkel um den die Kamera um ein z-Achse in diesem Zeitintervall $\Delta t$ rotiert wurde, bezeichnet wird. Ein vorgegebener Faktor $C_F$ bezeichnet eine Brennweitenänderung bzw. eine Translation entlang der z-Achse.

Das in Vorschrift (7) dargestellte Gleichungssystem ist nichtlinear, weshalb eine direkte Bestimmung der Parameter des Gleichungssystems nicht möglich ist.

Aus diesem Grund wird zur schnelleren Berechnung ein vereinfachtes Bewegungsmodell verwendet, bei dem die Kamerabewegung in der Abbildungsebene durch ein Bewegungsmodell mit 6 Parametern verwendet wird, welche gemäß folgender Vorschrift gebildet werden:

$$\begin{pmatrix} \tilde{X}_0 \\ \tilde{Y}_0 \end{pmatrix} = \begin{pmatrix} r'_{11} & r'_{12} \\ r'_{21} & r'_{22} \end{pmatrix} \cdot \begin{pmatrix} X_0 \\ Y_0 \end{pmatrix} + \begin{pmatrix} t'_X \\ t'_Y \end{pmatrix}. \qquad (8)$$

Das hieraus mit den Daten des Bewegungsvektorfeldes entstehende Gleichungssystem wird nun durch lineare Regression gelöst, wobei die Komplexität einer Invertierung einer symmetrischen 3 * 3 Matrix entspricht.

Nach Bestimmung der Parameter $r'_{11}$, $r'_{12}$, $r'_{21}$, $r'_{22}$, $t'_X$, und $t'_Y$ werden die Parameter der Vorschrift (7) gemäß folgenden Vorschriften approximiert:

$$\underline{T} = \underline{T}', \qquad (9)$$

$$C_F = \sqrt{\left| \det \begin{pmatrix} r_{11}' & r_{12}' \\ r_{21}' & r_{22}' \end{pmatrix} \right|}, \qquad (10)$$

$$\rho_Z = \arcsin \frac{1}{2} \left( r'_{21} - r'_{12} \right). \qquad (11)$$

Unter Verwendung dieser Parameter wird die Bewegung, die ein Bild relativ zu einer Kamera die das Bild aufnimmt, unterliegt, kompensiert.

**Fig.4c** zeigt die Bewegungsvektoren, die Bildblöcken zugeordnet sind, die in dem vorgegebenen Bereich 401 liegen. Dabei ist der vorgegebene Bereich 401 durch eine Iteration (Schritt 104) gegenüber dem vorgegebenen Bereich 401 aus Figur 4a verändert.

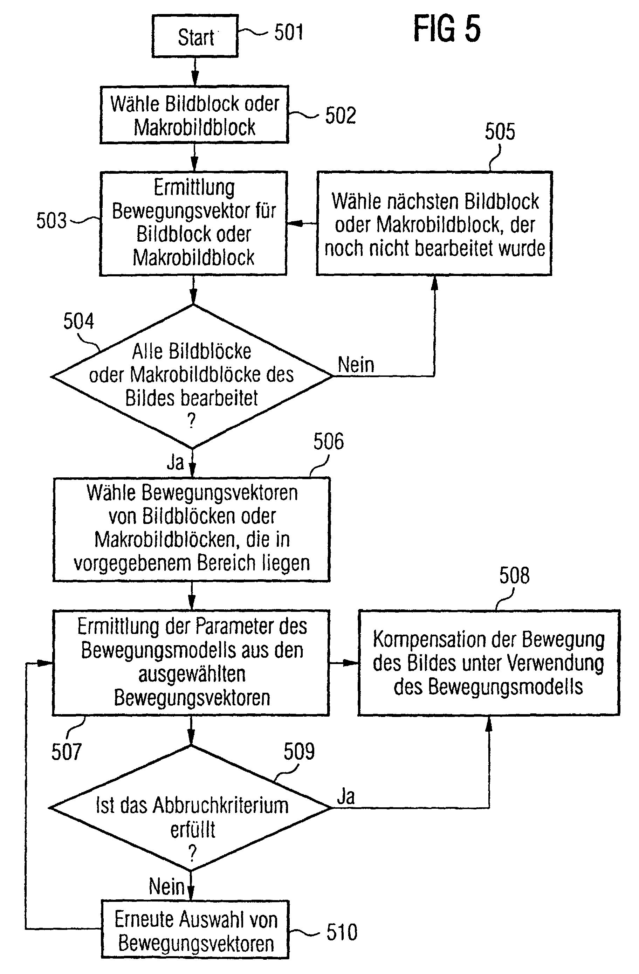

Anhand von **Fig.5** wird das Verfahren noch einmal in seinen einzelnen Verfahrensschritten dargestellt:

Nach Start des Verfahrens (Schritt 501) wird ein Bildblock oder Makrobildblock ausgewählt (Schritt 502). Für den ausgewählten Bildblock oder Makrobildblock wird ein Bewegungsvektor ermittelt (Schritt 503) und es wird in einem weiteren Schritt (Schritt 504) überprüft, ob alle Bildblöcke bzw. Makrobildblöcke des Bildes bearbeitet sind.

Ist dies nicht der Fall, so wird in einem weiteren Schritt (Schritt 505) ein weiterer Bildblock oder Makrobildblock, der noch nicht bearbeitet wurde, ausgewählt.

Sind jedoch alle Bildblöcke bzw. Makrobildblöcke bearbeitet, so werden die Bewegungsvektoren ausgewählt, die einem Bild-block oder einem Makrobildblock zugeordnet sind, die in dem vorgegebenen Bereich liegen (Schritt 506).

Aus den ausgewählten Bewegungsvektoren werden die Parameter des Bewegungsmodells bestimmt (Schritt 507). Ist eine weitere Iteration durchzuführen, d.h. die angegebene Anzahl an Iterationen noch nicht erreicht oder das Abbruchkriterium noch nicht erfüllt, so wird in einem weiteren Schritt (Schritt 509) ein neuer Bereich festgelegt bzw. die Gewichtungsmaske der nächsten Iteration in Abhängigkeit der Vektorunterschiedswerte VU berechnet (Schritt 510).

Es folgt die Kompensation der Bewegung des Bildes unter Verwendung des determinierten Bewegungsmodells (Schritt 508).

Im weiteren werden einige Alternativen zu dem oben dargestellten Ausführungsbeispiel erläutert:

Die Form des Bereichs ist grundsätzlich beliebig und vorzugsweise abhängig von Vorwissen über eine Szene. Es sollten diejenigen Bildbereiche nicht zur Determinierung des Bewegungsmodells herangezogen werden, von denen bekannt ist, daß sich diese Bildbereiche von der globalen Bewegung deutlich unterscheiden.

Der Bereich sollte nur Bewegungsvektoren von Bildbereichen enthalten, die aufgrund der Zuverlässigkeitswerte 342 des Bewegungsschätzverfahrens als zuverlässig ausgewiesen sind.

Allgemein kann die Bewegungsschätzung nach einem beliebigen Verfahren erfolgen und ist keineswegs auf das Prinzip des Blockmatchings beschränkt. So kann beispielsweise auch eine Bewegungsschätzung unter Verwendung der dynamischen Programmierung erfolgen.

Somit ist die Art der Bewegungsschätzung und somit die Art und Weise, wie ein Bewegungsvektor für einen Bildblock ermittelt wird, für die Erfindung nicht relevant.

Zur näherungsweisen Bestimmung der Parameter des Gleichungssystems (7) ist es alternativ möglich, die Sinus-Terme und Cosinus-Terme in Vorschrift (7) zu linearisieren.

Damit ergibt sich für kleine Winkel $\rho_z$ folgende Vorschrift

$$\begin{pmatrix} \Delta X \\ \Delta Y \end{pmatrix} = \begin{pmatrix} c_F - 1 & -c_F \omega_z \\ c_F \omega_z & c_F - 1 \end{pmatrix} \cdot \begin{pmatrix} X \\ Y \end{pmatrix} + \begin{pmatrix} t_X \\ t_Y \end{pmatrix} = \begin{pmatrix} R_1 & -R_2 \\ R_2 & R_1 \end{pmatrix} \cdot \begin{pmatrix} X \\ Y \end{pmatrix} + \begin{pmatrix} t_X \\ t_Y \end{pmatrix} \cdot \qquad (12)$$

Da die Optimierung der Gleichungen für $\Delta X$ und $\Delta Y$ nicht unabhängig voneinander ist, wird bezüglich der Summe der Fehlerquadrate minimiert, also gemäß folgender Vorschrift:

$$\sum_{\underline{V}} \left[ \left( \Delta X_\eta - R_1 X_\eta + R_2 Y_\eta - t_x \right)^2 + \left( \Delta Y_\eta - R_2 X_\eta + R_1 Y_\eta - t_y \right)^2 \right] \to \min \qquad (13)$$

Hierbei bezeichnen $\Delta X_\eta$, $\Delta Y_\eta$ die X- bzw. Y- Komponente des Bewegungsvektors des Bildblocks $\eta$ an der Position $X_\eta$, $Y_\eta$ des vorgegebenen Bereichs $\underline{V}$ des Bildes.

Gemäß Gleichung (12) sind $R_1$, $R_2$, $t_x$ und $t_y$ die zu bestimmenden Parameter des Bewegungsmodells.

Nach erfolgter Durchführung des Optimierungsverfahrens wird aufgrund des determinierten Gleichungssystems (12) durch Einsetzen der X- und Y-Komponente des jeweiligen Makroblocks der zugehörige modellbasierte Bewegungsvektor MBV ($\Delta X$, $\Delta Y$) bestimmt.

Statt der oben genannten Bereiche können auch Gewichtungsmasken $A_X$, $A_Y$, die die Zuverlässigkeit der Bewegungsvektoren, das a priori Wissen und die Rückschlüsse aus den VU bei iterativen Vorgehen für die X- und Y-Komponente der Bewegungsvektoren getrennt repräsentieren bei der Berechnung der Parameter des Bewegungsmodells gemäß folgenden Optimierungsansatzes genutzt werden:

$$\sum_{\underline{V}} \left[ \left( \alpha_{X_\eta} \cdot \left( \Delta X_\eta - R_1 X_\eta + R_2 Y_\eta - t_x \right) \right)^2 + \left( \alpha_{Y_\eta} \cdot \left( \Delta Y_\eta - R_2 X_\eta - R_1 Y_\eta - t_x \right) \right)^2 \right] \rightarrow \min$$

$$\alpha_{X_\eta} \in A_X, \; \alpha_{Y_\eta} \in A_Y. \tag{14}$$

Eine Gewichtungsmaske $A_x$, $A_y$ für die Zuverlässigkeit der Bewegungsvektoren (105) kann beispielsweise berechnet werden, indem die Werte $\alpha_x$, $\alpha_y$ für einen Bildblock beim Blockmatching wie folgt berechnet werden:

$$\alpha_x = \frac{1}{SAD_{match}} \cdot \sum_N \frac{|SAD_\eta - SAD_{match}|}{|x_\eta - x_{match}|}, \tag{15}$$

$$\alpha_y = \frac{1}{SAD_{match}} \cdot \sum_N \frac{|SAD_\eta - SAD_{match}|}{|y_\eta - y_{match}|}, \tag{16}$$

wobei $SAD_\eta$ die Summe der Pixeldifferenzen eines Blocks bei der $\eta$-ten Verschiebung ($x_\eta$, $y_\eta$) des Blockmatching und $SAD_{match}$ selbiges für das beste, schließlich ausgewählte Gebiet ($x_{match}$, $y_{match}$) darstellt. N ist die Gesamtanzahl an Suchpositionen, die untersucht worden sind. Wird dieser Wert nur unter Beachtung der beispielsweise 16 besten Gebiete berechnet, so kann das Blockmatching als "Spiralsuche", mit dem SAD des schlechtesten der 16 ausgewählten Gebiete als Abbruchkriterium, durchgeführt werden.

Eine weitere Möglichkeit, eine Gewichtungsmaske $A_x = A_y = A$ für die Zuverlässigkeit der Bewegungsvektoren zu berechnen besteht mit:

$$\alpha = \Sigma \frac{SAD - SAD_{match}}{N}, \tag{17}$$

wobei $\alpha = \alpha_x = \alpha_y$ der Gewichtungsfaktor eines Bildblocks bzw. dessen Bewegungsvektors ist.

Die Erfindung kann beispielsweise eingesetzt werden zur Kompensation einer Bewegung einer sich bewegenden Kamera oder auch zur Bewegungskompensation einer Kamera, die in ein mobiles Kommunikationsgerät (Videohandy) integriert ist.

Ferner kann die Erfindung auch zur Bildsegmentierung, wie in [2] beschrieben, eingesetzt werden.

Anschaulich ist die Erfindung darin zu sehen, daß Bewegungsvektoren, die bei der blockbasierten Bildcodierung ohnehin ermittelt werden, verwendet werden zur Ermittlung einer globalen Bewegung zwischen einer Kamera und einer durch die Kamera aufgenommenen Bildsequenz.

Bei der Ermittlung der Bewegung werden jedoch nur Bewegungsvektoren berücksichtigt, die Bildblöcken zugeordnet sind, die in einem vorgegebenen Bereich liegen.

Zur Berechnung der globalen Bewegung werden die Bewegungsvektoren der Bildblöcke entsprechend ihrer Zuverlässigkeit gewichtet.

In einer Alternative des oben beschriebenen Ausführungsbeispiels ist ein vorgegebener Schwellenwert S variabel ausgestaltet. Der Schwellenwert S gibt an, wie viele Bilder maximal jeweils auf der Grundlage eines Referenzbildes zur Ermittlung der Bewegung herangezogen werden können, bis wieder ein neues Referenzbild generiert werden muß.

Der Schwellenwert S ist abhängig von der Länge der Vektorsumme der ermittelten modellbasierten Bewegungsvektoren MBV vorangegangener Bilder.

Der Schwellenwert S wird gemäß folgender Vorschrift gebildet:

$$S = \max\left(\frac{\text{const}}{V}, M\right), \qquad (18)$$

wobei mit

- V eine Länge der Vektorsumme der letzten k ermittelten modellbasierten Bewegungsvektoren MBV (bevorzugter Wert für k: k = 5),
- M ein zulässiges vorgegebenes Maximum für den Schwellenwert S (bevorzugter Wert für M: M = 10),
- const ein frei vorgegebbarer konstanter Wert,

bezeichnet werden.

Die Beschränkung des Schwellenwert S stellt sicher, daß das Verfahren zur Bewegungsermittlung wieder neu aufsetzen kann, falls bei einem zu schnellen Schwenk der Kamera die Bewegungsvektoren falsch erfaßt worden sind.

Der Vorteil der Bildung des Schwellenwertes gemäß Vorschrift (1) ist insbesondere darin zu sehen, daß für den Fall, daß kein beabsichtigter Schwenk mit der Kamera durchgeführt wird, die Bewegung über lange Zeit stabil gehalten wird. Im Fall eines Schwenks jedoch ist es notwendig, den Schwellenwert S zu verkleinern, damit kein zu großer modellbasierter Bewegungsvektor zwischen den zu vergleichenden Bildern auftritt, der nicht mehr erfaßt werden könnte.

Im Rahmen der grundlegenden Vorgehensweise, für die Ermittlung eines Bildes ein Referenzbild zu verwenden, das mindestens zwei Zeitpunkt vor dem betrachteten Bild generiert worden ist, können auch die bekannten Verfahren zur Bewegungsermittlung des Bildes aus [1], [2], [3], [4], [5] und [6] eingesetzt werden.

In diesem Dokument sind folgende Veröffentlichungen zitiert:

[1] Uomori K, Morimura A, Ishii H, "Electronic Image Stabilization System for Video Cameras und VCRs",SMPTE Journal (1992), Vol. 101, No. 2, S. 66 - 75

[2] Balakirsky SB., Chellappa R, "Performance characterization of image stabilization Algorithm", Proc. Int. Conf. on Image Processing (1996), Vol. 2, 3, S. 413 - 16

[3] Gupta R, Theys M D, Siegel H J, "Background compensation and an active-camera motion tracking algorithm", Proc. of the 1997 Int. Conf. on Parallel Processing. (1997), S. 431 - 40

[4] Wang D, Wang L, "Global Motion Parameter Estimation Using a Fast and Robust Algorithm, IEEE, Trans. on Circuits and System for Video Tech., Vol. 7, No. 5 (1997), S. 823 - 26

[5] R. Mech, M. Wollborn, A noise robust method for 2D shape estimation of moving objects in video sequences considering a moving camera, Workshop on image analysis for multimedia interactive services, Belgien, Juni 1997

[6] S. Colonnese et al, Adaptive segmentation of moving object versus background for video coding, Proceedings of SPIE annual Symposium, Vol. 3164, San Diego, August 1997

[7] US-A-5 838 828

[8] US-A-5 430 480

**Patentansprüche**

**1.** Verfahren zur rechnergestützten Ermittlung einer Bewegung, der ein digitalisiertes Bild unterliegt,

- bei dem das digitalisierte Bild Bildpunkte enthält,
- bei dem unter Berücksichtigung eines Referenzbildes (601) eine Bewegungsschätzung für das Bild durchgeführt wird,
- bei dem das Referenzbild zumindest zwei Zeitpunkte vor dem digitalisierten Bild (603) generiert worden ist, wobei zu jeweils einem Zeitpunkt ein zu codierendes Bild generiert wird,
- bei dem die Bewegung aus der Bewegungsschätzung ermittelt wird,
- bei dem der Zeitpunkt, zu dem das Referenzbild generiert worden ist, abhängt von einem vorgegebenen Schwellenwert und
- bei dem der Schwellenwert (S) abhängig ist von der Summe der ermittelten Bewegungen von Bildern, die bis zu einer vorgegebenen Anzahl vorangegangener Zeitpunkte generiert worden sind.

2. Verfahren nach Anspruch 1,
   bei dem die ermittelte Bewegung kompensiert wird.

3. Verfahren nach einem der Ansprüche 1 oder 2,
   eingesetzt in einer bewegbaren Anordnung, deren Bewegung mit dem Verfahren kompensiert wird.

4. Verfahren nach Anspruch 3,
   bei dem die Anordnung eine Kamera ist.

5. Verfahren nach Anspruch 4,
   bei dem die Anordnung eine Kamera ist, die in ein mobiles Kommunikationsgerät integriert ist.

6. Anordnung zur Ermittlung einer Bewegung, der ein digitalisiertes Bild unterliegt,
   mit einem Prozessor, der derart eingerichtet ist, daß folgende Schritte durchführbar sind:

   - das digitalisierte Bild enthält Bildpunkte,
   - unter Berücksichtigung eines Referenzbildes (601) wird eine Bewegungsschätzung für das Bild durchgeführt,

   das Referenzbild ist zumindest zwei Zeitpunkte vor dem digitalisierten Bild (603) generiert worden, wobei der Zeitpunkt, zu dem das Referenzbild generiert worden ist, abhängt von einem vorgegebenen Schwellenwert (S), wobei der Schwellenwert abhängig ist von der Summe der ermittelten Bewegungen von Bildern, die bis zu einer vorgegebenen Anzahl vorangegangener Zeitpunkte generiert worden sind, und wobei zu jeweils einem Zeitpunkt ein zu codierendes Bild generiert wird, und

   - die Bewegung wird aus der Bewegungsschätzung ermittelt.

7. Anordnung nach Anspruch 6,
   bei der der Prozessor derart eingerichtet ist, daß die ermittelte Bewegung kompensiert wird.

8. Anordnung nach einem der Ansprüche 6 oder 7,
   eingesetzt in einer bewegbaren Anordnung, deren Bewegung mit dem Verfahren kompensiert wird.

9. Anordnung nach Anspruch 8,
   bei dem die Anordnung eine Kamera ist.

10. Anordnung nach Anspruch 9,
    bei dem die Anordnung eine Kamera ist, die in ein mobiles Kommunikationsgerät integriert ist.

11. Computerprogramm-Erzeugnis, das ein computerlesbares Speichermedium umfaßt, auf dem ein Programm gespeichert ist, das es einem Computer ermöglicht, nachdem es in einen Speicher des Computers geladen worden ist, folgende Schritte durchzuführen zur Ermittlung einer Bewegung, der ein digitalisiertes Bild unterliegt:

    - das digitalisierte Bild enthält Bildpunkte,
    - unter Berücksichtigung eines Referenzbildes (601) wird eine Bewegungsschätzung für das Bild durchgeführt,
    - das Referenzbild ist zumindest zwei Zeitpunkte vor dem digitalisierten Bild (603) generiert worden, wobei der Zeitpunkt, zu dem das Referenzbild generiert worden ist, abhängt von einem vorgegebenen Schwellenwert (S), wobei der Schwellenwert abhängig ist von der Summe der ermittelten Bewegungen von Bildern, die bis zu einer vorgegebenen Anzahl vorangegangener Zeitpunkte generiert worden sind, und wobei zu jeweils einem Zeitpunkt ein zu codierendes Bild generiert wird, und

- die Bewegung wird aus der Bewegungsschätzung ermittelt.

12. Computerlesbares Speichermedium, auf dem ein Programm gespeichert ist, das es einem Computer ermöglicht, nachdem es in einen Speicher des Computers geladen worden ist, folgende Schritte durchzuführen zur Ermittlung einer Bewegung, der ein digitalisiertes Bild unterliegt:

- das digitalisierte Bild enthält Bildpunkte,
- unter Berücksichtigung eines Referenzbildes (601) wird eine Bewegungsschätzung für das Bild durchgeführt,
- das Referenzbild ist zumindest zwei Zeitpunkte vor dem digitalisierten Bild (603) generiert worden, wobei der Zeitpunkt, zu dem das Referenzbild generiert worden ist, abhängt von einem vorgegebenen Schwellenwert (S), wobei der Schwellenwert abhängig ist von der Summe der ermittelten Bewegungen von Bildern, die bis zu einer vorgegebenen Anzahl vorangegangener Zeitpunkte generiert worden sind, und wobei zu jeweils einem Zeitpunkt ein zu codierendes Bild generiert wird, und
- die Bewegung wird aus der Bewegungsschätzung ermittelt.


**Claims**

1. Method for computer-aided determining of a movement, to which a digitized image is subject,

   - in which the digitized image contains pixels,
   - in which movement estimation for the image is carried out taking account of a reference image (601),
   - in which the reference image was generated at least two points in time before the digitized image (603), with an image which is to be coded being generated for each point in time,
   - in which the movement is determined from the movement estimation,
   - in which the point in time at which the reference image was generated depends on a predetermined threshold value, and
   - in which the threshold value (S) is dependent on the sum of the determined movements of the images which were generated prior to a predetermined number of preceding points in time.

2. Method according to Claim 1,
   in which the determined movement is compensated for.

3. Method according to one of Claims 1 or 2,
   used in a mobile arrangement, whose movement is compensated for using the method.

4. Method according to Claim 3,
   in which the arrangement is a camera.

5. Method according to Claim 4,
   in which the arrangement is a camera which is integrated in a mobile communications appliance.

6. Arrangement for determining a movement, to which a digitized image is subject,
   having a processor which is set up such that the following steps can be carried out:

   - the digitized image contains pixels,
   - movement estimation for the image is carried out taking account of a reference image (601),

   the reference image was generated at least two points in time before the digitized image (603), with the point in time at which the reference image was generated depending on a predetermined threshold value (S), with the threshold value being dependent on the sum of the determined movements of images which were generated prior to a predetermined number of preceding points in time, and with an image which is to be coded being generated for each point in time, and

   - the movement being determined from the movement estimation.

**7.** Arrangement according to Claim 6,
in which the processor is set up such that the determined movement is compensated for.

**8.** Arrangement according to one of Claims 6 or 7,
used in a mobile arrangement, whose movement is compensated for using the method.

**9.** Arrangement according to Claim 8,
in which the arrangement is a camera.

**10.** Arrangement according to Claim 9,
in which the arrangement is a camera which is integrated in a mobile communications appliance.

**11.** Computer program product, which has a computer-legible storage medium on which a program is stored which, once said program has been loaded into a memory in the computer, makes it possible for the computer to carry out the following steps in order to determine a movement to which a digitized image is subject:

- the digitized image contains pixels,
- movement estimation for the image is carried out taking account of a reference image (601),
- the reference image was generated at least two points in time before the digitized image (603), with the point in time at which the reference image was generated depending on a predetermined threshold value (S), with the threshold value being dependent on the sum of the determined movements of images which were generated prior to a predetermined number of preceding points in time, and with an image which is to be coded being generated for each point in time, and
- the movement being determined from the movement estimation.

**12.** Computer-legible storage medium on which a program is stored which, once said program has been loaded into a memory in the computer, makes it possible for the computer to carry out the following steps in order to determine a movement to which a digitized image is subject:

- the digitized image contains pixels,
- movement estimation for the image is carried out taking account of a reference image (601),
- the reference image was generated at least two points in time before the digitized image (603), with the point in time at which the reference image was generated depending on a predetermined threshold value (S), with the threshold value being dependent on the sum of the determined movements of images which were generated prior to a predetermined number of preceding points in time, and with an image which is to be coded being generated for each point in time, and
- the movement being determined from the movement estimation.

**Revendications**

**1.** Procédé de détermination, assisté par ordinateur, d'un mouvement auquel est soumise une image numérisée, dans lequel

- l'image numérisée contient des points d'image,
- il est procédé à une évaluation du mouvement pour l'image, compte tenu d'une image de référence (601),
- l'image de référence a été générée au moins deux points de temps avant l'image numérisée (603), une image à coder étant générée à chaque point de temps,
- le mouvement est déterminé au départ de l'évaluation du mouvement,
- le point de temps auquel l'image de référence a été générée dépend d'une valeur seuil donnée,
- la valeur seuil (S) dépend elle-même de la somme des mouvements déterminés d'images qui ont été générées jusqu'à un nombre donné de points de temps antérieurs dans le temps.

**2.** Procédé selon la revendication 1, dans lequel le mouvement déterminé est compensé.

**3.** Procédé selon l'une des revendications 1 ou 2, mis en oeuvre dans un dispositif mobile et dont le mouvement est compensé par le procédé.

**4.** Procédé selon la revendication 3, dans lequel le dispositif est une caméra.

**5.** Procédé selon la revendication 4, dans lequel le dispositif est une caméra intégrée dans un outil de communication mobile.

**6.** Dispositif pour déterminer un mouvement auquel est soumise une image numérisée, comprenant un processeur configuré de manière telle que les étapes suivantes peuvent être exécutées:

- l'image numérisée contient des points d'image,
- il est procédé à une évaluation du mouvement pour l'image, compte tenu d'une image de référence (601),
- l'image de référence a été générée au moins deux points de temps avant l'image numérisée (603), le point de temps auquel l'image de référence a été générée dépendant d'une valeur seuil (S) donnée, laquelle dépend de la somme des mouvements déterminés d'images qui ont été générées jusqu'à un nombre donné de points de temps antérieurs, et une image à coder étant générée à chaque point de temps, et
- le mouvement est déterminé au départ de l'évaluation du mouvement.

**7.** Dispositif selon la revendication 6, dans lequel le processeur est configuré de manière telle que le mouvement déterminé est compensé.

**8.** Dispositif selon l'une des revendications 6 ou 7, mis en oeuvre dans un dispositif mobile et dont le mouvement est compensé par le procédé.

**9.** Dispositif selon la revendication 8, dans lequel le dispositif est une caméra.

**10.** Dispositif selon la revendication 9, dans lequel le dispositif est une caméra intégrée dans un outil de communication mobile.

**11.** Produit-programme d'ordinateur comprenant un support d'information lisible par ordinateur sur lequel est mis en mémoire un programme permettant à un ordinateur, après avoir été chargé dans une mémoire de ce dernier, d'exécuter les étapes suivantes pour la détermination d'un mouvement auquel est soumise une image numérisée:

- l'image numérisée contient des points d'image,
- il est procédé à une évaluation du mouvement pour l'image, compte tenu d'une image de référence (601),
- l'image de référence a été générée au moins deux points de temps avant l'image numérisée (603), le point de temps auquel l'image de référence a été générée dépendant d'une valeur seuil (S) donnée, laquelle dépend de la somme des mouvements déterminés d'images qui ont été générées jusqu'à un nombre donné de points de temps antérieurs, et une image à coder étant générée à chaque point de temps, et
- le mouvement est déterminé au départ de l'évaluation du mouvement.

**12.** Support d'information lisible par ordinateur, sur lequel est mis en mémoire un programme permettant à un ordinateur, après avoir été chargé dans une mémoire de ce dernier, d'exécuter les étapes suivantes pour la détermination d'un mouvement auquel est soumise une image numérisée:

- l'image numérisée contient des points d'image,
- il est procédé à une évaluation du mouvement pour l'image, compte tenu d'une image de référence (601),
- l'image de référence a été générée au moins deux points de temps avant l'image numérisée (603), le point de temps auquel l'image de référence a été générée dépendant d'une valeur seuil (S) donnée, laquelle dépend de la somme des mouvements déterminés d'images qui ont été générées jusqu'à un nombre donné de points de temps antérieurs, et une image à coder étant générée à chaque point de temps, et

le mouvement est déterminé au départ de l'évaluation du mouvement.

## FIG 1

106 — [ ]

101 — [ ]

102 — [ ]

103 [ ]

105 [ ]

104 [ ]

## FIG 2

201

219

204

202

203   205

218

212

214

208

209   211

210

213

215

220

216

207

206

217

FIG 3

FIG 4A

FIG 4B

FIG 4C

EP 1 177 526 B1

FIG 5

Start — 501

Wähle Bildblock oder Makrobildblock — 502

503 — Ermittlung Bewegungsvektor für Bildblock oder Makrobildblock

505

Wähle nächsten Bildblock oder Makrobildblock, der noch nicht bearbeitet wurde

504

Alle Bildblöcke oder Makrobildblöcke des Bildes bearbeitet ?

Nein

Ja

506

Wähle Bewegungsvektoren von Bildblöcken oder Makrobildblöcken, die in vorgegebenem Bereich liegen

508

Ermittlung der Parameter des Bewegungsmodells aus den ausgewählten Bewegungsvektoren

Kompensation der Bewegung des Bildes unter Verwendung des Bewegungsmodells

507

509

Ist das Abbruchkriterium erfüllt ?

Ja

Nein

Erneute Auswahl von Bewegungsvektoren — 510

## FIG 6

EP 1 177 526 B1